# EUROPÄISCHE PATENTSCHRIFT

(11) **EP 3 736 113 B1**
(45) Veröffentlichungstag und Bekanntmachung des Hinweises auf die Patenterteilung: **21.02.2024**
(21) Anmeldenummer: 20173075.1
(22) Anmeldetag: 05.05.2020
(51) Int. Cl.: B29C 65/20, B29C 65/78, E06B 3/96, E06B 3/964

(54) **VORRICHTUNG UND VERFAHREN FÜR DIE HERSTELLUNG EINES ELEMENTES**
DEVICE AND METHOD FOR THE PRODUCTION OF AN ELEMENT
DISPOSITIF ET PROCÉDÉ DE FABRICATION D'UN ÉLÉMENT

(30) Priorität: 07.05.2019 DE 102019111808
(43) Veröffentlichungstag der Anmeldung: 11.11.2020
(73) Patentinhaber: Urban GmbH & Co. Maschinenbau KG, 87700 Memmingen (DE)
(72) Erfinder: Schwörendt, Torsten, 87448 Waltenhofen (DE)
(74) Vertreter: Patentanwälte Olbricht, Buchhold, Keulertz Partnerschaft mbB

(56) Entgegenhaltungen:
- DE-U1- 20 206 377
- GB-A- 2 376 657

## Beschreibung

Die Erfindung betrifft eine Vorrichtung und ein Verfahren für die Herstellung eines insbesondere kreuzartigen Elementes aus mindestens drei, an den Kontaktflächen ihrer Enden miteinander verbundenen Kunststoff-Profilstäben.

Kunststofffenster besitzen in der Regel einen aus mehreren Kunststoff-Profilstäben bestehenden, oftmals rechteckigen, Rahmen. Dies gilt sowohl bei dem in die Hausöffnung einzusetzenden Stockrahmen wie auch bei dem an dem Stockrahmen drehbar gelagerten Fensterrahmen.

Bei einem Fensterrahmen ist es auch bekannt, die von dem Rahmen eingefasste Fläche durch mehrere Streben, Kämpfer oder Sprossen zu unterteilen, diese Teile treffen sich dann in der Fläche des Rahmens vorzugsweise kreuzartig, also in einem rechten Winkel ohne aber hierauf die Offenbarung zu beschränken.

Wird nun der gesamte Fensterrahmen, also bestehend aus dem außenliegenden Rahmen und den darin innenliegenden Teilen aus Kunststoff-Profilstäben gefertigt, so muss produktionsbedingt zuerst das von dem Rahmen eingefasste, aus mehreren Teilen bestehende Element hergestellt werden, welches hernach mit den außenliegenden, den Rahmen definierenden Profilstäben verbunden wird.

Dabei bildet ein solches Element oftmals ein Kreuz, d.h. die einzelnen Profilstäbe sind jeweils an ihren Enden mit weiteren Profilstäben verbunden, derart, dass sich z.B. ein aus vier Profilstäben ergebendes, jeweils aneinander einen rechten Winkel einschließendes Kreuz ergibt.

Zur Herstellung ist es hierzu bekannt zunächst die Profilstäbe in der notwendigen Länge bereitzustellen und diese zumindest an einem Ende (wo diese zusammenstoßen, nachfolgend auch Verbindungsbereich genannt) winkelig zuzuschneiden, derart, dass ein erster Profilstab am Verbindungsbereich mit einem zweiten und dritten Profilstab gleichzeitig verbunden werden kann. An dem Profilstab werden daher durch das Zuschneiden zwei winkelig zueinander stoßende Kontaktflächen erzeugt.

Nachdem die Profilstäbe entsprechend hergerichtet und bereitgestellt sind, werden diese in der Regel händisch verschweißt, d.h. die Kontaktflächen werden jeweils mit einem Heizelement oder Heizspiegel erwärmt bis sich der Kunststoff plastifiziert und hernach, nachdem der Heizspiegel entfernt ist, werden die zu verbindenden Kunststoff- Profilstäbe zueinander gefügt und materialschlüssig verbunden, das heißt verschweißt.

Bei dieser Vorgehensweise ist es im Stand der Technik fast unvermeidbar, dass an den Kontaktflächen seitlich Kunststoffmaterial, der sogenannte Schweißwulst, austritt, der in einem nachfolgenden Bearbeitungsschritt zu entfernen ist, was in einer sogenannten Verputzmaschine, halbautomatisch oder automatisch erfolgt.

DE 202 06 377 U1 offenbart eine Vorrichtung zum Verbinden eines Querholms mit Rahmenteilen eines Fensterrahmens, Türrahmens oder dergleichen.

Der Herstellung dieser insbesondere kreuzförmigen Elemente ist im Stand der Technik sowohl zeit- wie auch kostenaufwändig, und auch die Ästhetik der Sichtflächen des Verbindungsbereiches ist nicht optimal.

Die vorliegende Erfindung hat es sich zur Aufgabe gemacht, zumindest einen der vorgenannten Nachteile des Standes der Technik zu verbessern.

Zur Lösung dieser Aufgabe geht die Erfindung aus von einer Vorrichtung nach Anspruch 1.

Die erfindungsgemäße Aufgabe wird aber auch durch ein Verfahren für die Herstellung eines kreuzartigen Elementes aus mindestens drei, an den Kontaktflächen ihrer Enden miteinander verbundenen Kunststoff-Profilstäben nach Anspruch 6 gelöst.

Der Pfiff der Erfindung liegt darin, dass in einer Maschine bzw. Vorrichtung das Plastifizieren und Fügen, also der Verschweißprozess mit einer Vor- und Nachbearbeitung durch ein Bearbeitungswerkzeug kombiniert wird, wobei vorzugsweise die Aufspannung der Profilstäbe auf die jeweiligen Aufspannvorrichtungen während des Herstellprozesses nicht gelöst wird.

Diese dauerhafte Aufspannung hat den Vorteil, dass die relative Lage der miteinander zu verbindenden Kontaktflächen der Profilstäbe zwischen den einzelnen Bearbeitungsschritten unverändert bleibt, und daher eine exakte Vorbereitung der Kontaktflächen kombiniert mit einem optimierten Erwärmungs- bzw. Plastifizierungsprozess in eine Schweißverbindung resultiert, die möglichst schweißwulstarm ausgestaltet ist und daher nicht oder nur kaum nachbearbeitet werden muss, also keine oder nur eine geringe Nachbearbeitung benötigt, ohne aber dabei die Festigkeit der Verbindung zu reduzieren. Aufgrund der genauen Vorbereitung der Kontaktflächen der Profilstäbe, bzw. einer geschickten Verfahrensführung wird die Festigkeit der Verbindung nicht verschlechtert.

Der erfindungsgemäße Vorschlag verbessert bereits erheblich die ästhetische Ausgestaltung eines Elementes, welches mit der erfindungsgemäßen Vorrichtung oder nach dem erfindungsgemäßen Verfahren hergestellt wird.

Überraschenderweise erreicht die Erfindung aber auch eine erhebliche Reduktion der Herstellungskosten. Die automatisierte Fertigung spart Zeit und auch das Halten des bereits fertig hergestellten Elementes in den jeweiligen Aufspannvorrichtungen begünstigt eine hohe Prozesssicherheit, da das Element erst nach einer ausreichenden Abkühlzeit, wenn der Schweißbereich ausreichend stabil ist, aus der Vorrichtung entnommen werden kann. Da die Ausschussproduktion dadurch erheblich reduziert wird, sinken die Herstellungskosten auch unter diesem Aspekt.

Darüber hinaus ist der erfindungsgemäße Vorschlag, sowohl für das Verfahren wie auch für die Vorrichtung, sehr variabel. Mindestens ein Bearbeitungswerkzeug wird entweder vor dem Erwärmen oder auch nach dem Erwärmen, gegebenenfalls auch zu beiden Zeitpunkten, je nach gewünschter Prozessführung, eingesetzt.

Die Erfindung ist, zusammengefasst, sehr variabel in der Prozessführung, erreicht hohe Prozesssicherheit sowie optisch sehr ansprechende Verbindungsbereiche und steigert durch verkürzte Bearbeitungszeiten erheblich die Effizienz und daher die Wertschöpfung.

Des Weiteren ist erfindungsgemäß vorgesehen, dass die Vorrichtung mindestens drei Aufspannvorrichtungen aufweist. Natürlich ist es möglich, dass die Vorrichtung auch mehr als drei Aufspannvorrichtungen (z.B. vier, fünf, sechs oder noch mehr) aufweist, wenn eben mehr als drei Profilstäbe im Verbindungsbereich an dem Verbinden zu dem Element beteiligt sind. Charakteristisch dabei ist, dass die eingesetzten Profilstäbe durch die Aufspannvorrichtungen, auf welchen diese aufgespannt sind, sowohl bei der Plastifizierungsphase, wie auch bei dem nachfolgenden Fügeprozess aufeinander zu bewegt werden, also in Richtung des gemeinsamen Verbindungsbereiches. Diese Bewegung kann sternförmig oder T-förmig sein.

Vorteilhafter Weise werden dabei alle beteiligten Kontaktflächen gleichzeitig erwärmt und auch alle Profilstäbe hernach gefügt, also geschweißt. Eine solche Vorgehensweise gewährleistet eine hohe Produktionssicherheit und spart auch Zeit, wenngleich die Erfindung auch Lösungen umfasst, bei welchen das Element nicht in einem einzigen Schritt hergestellt (einerseits erwärmt, andererseits gefügt) wird, sondern die Herstellung des Elementes in zwei oder mehreren Teilschritten erfolgt, bei welchen jeweils ein Teil des Elementes in gleicher Weise produziert wird.

Bei einer bevorzugten Ausgestaltung des Vorschlags ist vorgesehen, dass für das mindestens eine Heizelement je eine Führung und ein Antrieb vorgesehen ist, um das mindestens eine Heizelement entlang einer Anstellrichtung zwischen einer Plastifizierungs- und einer Vorhalteposition zu verfahren.

Des Weiteren ist vorgesehen, dass die Bewegungsrichtungen der Aufspannvorrichtungen auf Höhe der Mittelachse der Profilstäbe eine Bewegungsebene definieren, und die Anstellrichtung mit der Bewegungsebene einen spitzen bis rechtwinkeligen, vorzugsweise einen rechten Winkel einschließt. Die so definierte Bewegungsebene stellt eine Bezugsfläche für die weitere Beschreibung dar. Natürlich ist es möglich, anstelle der Höhe der Mittelachse der Profilstäbe auch auf die Lage der Führungen abzustellen, auf welchen die Aufspannvorrichtungen beweglich geführt sind. Die vorgeschlagene Anordnung erreicht, dass die Bewegung des Heizelementes/Heizspiegels nicht mit der Bewegung der Profilstäbe kollidiert bzw. den geringeren Platz in der Bewegungsebene weiter verengt. Geschickter Weise wird die Anstellrichtung rechtwinklig zur Bewegungsebene definiert, und somit das Heizelement von oben oder unten in den Verbindungsbereich angestellt.

In einer vorteilhaften Ausgestaltung ist vorgesehen, dass das mindestens eine Bearbeitungswerkzeug an einem beweglich gelagerten und positionierbaren Werkzeugträger angeordnet ist. Es ist von Vorteil, wenn das Bearbeitungswerkzeug oder die Bearbeitungswerkzeuge im Raum komfortabel positioniert werden, so sind neben einer Bearbeitung der Kontaktflächen der Profilstäbe oder Sichtflächen des Elementes auch andere Bearbeitungen an dem Element bzw. den Profilstäben möglich. Vorteilhafter Weise trägt dabei der Werkzeugträger nicht nur ein Bearbeitungswerkzeug, sondern auch mehrere unterschiedliche, um so auch unterschiedliche Bearbeitung auszuführen. Günstiger Weise ist der Werkzeugträger mit dem Bearbeitungswerkzeug zumindest entlang einer, vorteilhafter Weise aber bezüglich zweier oder dreier Raumachsen beweglich angeordnet. Für die Bewegung des Werkzeugträgers ist ein entsprechender Antrieb vorgesehen. Der Antrieb des Werkzeugträgers bewegt somit auch das Bearbeitungswerkzeug während seiner Bearbeitung und positioniert so das Bearbeitungswerkzeug an den gewünschten Stellen. Gegebenenfalls nimmt der Werkzeugträger auch einen Antrieb für das Bearbeitungswerkzeug (zum Beispiel einen Antriebsmotor für einen Fräser) auf.

Geschickter Weise ist vorgesehen, dass ein Portal über der Aufspannvorrichtung vorgesehen ist, das mindestens ein Bearbeitungswerkzeug und/oder einen Heizspiegel trägt und diese zumindest teilweise positioniert. Der erfindungsgemäße Vorschlag ein Portal für die Positionierung des Bearbeitungswerkzeuges und/oder des Heizelementes/Heizspiegels einzusetzen, erlaubt in einfacher Weise eine hohe Beweglichkeit dieser Bauteile. Da üblicherweise das Bearbeitungswerkzeug nicht gleichzeitig mit dem Heizelement in Einsatz kommt, können diesen beiden Bauteile auch einen gemeinsamen Träger besitzen, was den Aufbau vereinfacht. Das Portal ist dabei in einer Ebene über der Bewegungsebene angeordnet und behindert somit nicht die Bewegung der Aufspannvorrichtungen. Günstiger Weise erlaubt das Portal dann auch eine Grobpositionierung des mindestens einen Bearbeitungswerkzeuges und/oder des Heizelementes, die exakte Positionierung erfolgt dann gegebenenfalls noch durch einen separaten Positionsantrieb des Bearbeitungswerkzeuges (gegebenenfalls seines Werkzeugträgers) oder des Heizelementes.

In einer weiteren bevorzugten Ausführungsform ist vorgesehen, dass ein mehrgelenkiger Roboterarm vorgesehen ist, der mindestens ein Bearbeitungswerkzeug und/oder einen Heizspiegel trägt und diese zumindest teilweise positioniert. Der Vorzug des Einsatzes eines mehrgelenkiger Roboterarmes für die Positionierung des mindestens einen Bearbeitungswerkzeuges und/oder des Heizelementes/Heizspiegels liegt in der hohen Beweglichkeit des Roboterarmes, der eine fast unbegrenzte Ausrichtung oder Anstellung des jeweiligen Bauteiles erlaubt. Natürlich ist der Einsatz des Roboterarmes auch nur auf Spezialaufgaben zu beschränken, wobei bei geschickter Prozessführung auch eine Parallelbearbeitung einerseits mit dem Roboterarm, andererseits mit dem Portal oder anderen Bauteilen möglich ist.

Des Weiteren ist günstiger Weise vorgesehen, dass ein spanabhebendes Bearbeitungswerkzeug, wie zum Beispiel ein Messer, Fräser oder Bohrer vorgesehen ist.

Vorteilhafter Weise ist vorgesehen, dass zumindest eine Aufspannvorrichtung zusätzlich auch winkelig bis rechtwinkelig zur Bewegungsebene beweg- und positionierbar ist. Dadurch ist es möglich auch verhältnismäßig komplexe Elemente herzustellen.

Vorteilhafter Weise ist vorgesehen, dass die Vorrichtung zur Durchführung des erfindungsgemäßen Verfahrens ausgebildet ist.

Des Weiteren ist in dem Vorschlag vorteilhafter Weise vorgesehen, dass die Schritte dieses Verfahrens genau in folgender Reihenfolge erfolgen:
- Bereitstellen und Aufspannen jedes zu verbindenden Profilstabes auf einer Aufspannvorrichtung,
- Materialabhebende Bearbeitung der jeweiligen Kontaktfläche bzw. -bereiche,
- Erwärmen bzw. Plastifizieren der endseitigen Kontaktflächen bzw. -bereiche der Profilstäbe, und
- Fügen und Verbinden der Profilstäbe.

Alternativ hierzu ist vorgesehen, dass das Verfahren genau in folgender Abfolge der folgenden Schritte durchgeführt wird:
- Bereitstellen und Aufspannen jedes zu verbindenden Profilstabes auf einer Aufspannvorrichtung,
- Erwärmen bzw. Plastifizieren der endseitigen Kontaktflächen bzw. -bereiche der Profilstäbe,
- Fügen und Verbinden der Profilstäbe, und
- materialabhebende Bearbeitung zumindest der Sichtfläche des Elementes im Verbindungsbereich der Profilstäbe.

Beiden Alternativen kann gemein sein, dass der Schritt des
- Bewegens der in den Aufspannvorrichtungen aufgespannten Profilstäbe in Richtung des gemeinsamen Verbindungsbereiches aufeinander zu
unmittelbar vor dem Fügen und Verbinden der Profilstäbe erfolgt, so dass sich dieser Schritt in die Abfolge der Verfahrensschritte jeder der beiden Alternativen einsortiert.

Beide Alternativen lösen das eingangs beschriebene Problem, wobei sich die Erfindung insbesondere dadurch auszeichnet, dass für die Erreichung des erfindungsgemäßen Erfolges zwei alternative Wege bestehen! Natürlich ist es möglich diese beiden Konzepte miteinander zu kombinieren, weswegen in einer vorteilhaften Weiterentwicklung gerade des ersten Vorschlages vorgesehen wird, dass nach dem Fügen eine materialabhebende Bearbeitung zumindest der Sichtfläche des Elementes im Verbindungsbereich der Profilstäbe erfolgt.

Diese materialabhebende Bearbeitung nach dem Fügen entspricht dem Verputzvorgang, wie er im Stand der Technik bekannt ist, wobei sich dieses Verputzen nicht nur auf die Sichtflächen beschränkt, sondern auch an den Seitenflächen des Profiles, welche die Sichtflächen miteinander verbindet, ebenfalls ausgeführt wird.

Erfindungsgemäß ist deshalb vorgesehen, dass nach dem Fügen eine materialabhebende Bearbeitung zumindest der die Sichtflächen des Elementes im Verbindungsbereich der Profilstäbe verbindende Seitenflächen erfolgt. Es ist klar, dass bei einem aus drei, vier, fünf oder noch mehr Profilstäben zusammengesetzten Element, eine Vielzahl von Innenecken, die ja die Verbindungslinie zwischen den Sichtflächen beschreibt, zu bearbeiten ist. Dabei ist es günstig, dass das mindestens eine Bearbeitungswerkzeug in diesem Bereich komfortabel zu positionieren ist, wofür die Offenbarung ebenfalls entsprechende Vorschläge macht.

Erfindungsgemäß erfolgt nach dem Erwärmen und vor dem Fügen eine weitere materialabhebende Bearbeitung der jeweiligen Kontaktflächen bzw. -bereiche und/oder der Sichtflächen des Verbindungsbereiches des Elementes.

Überraschenderweise ist gefunden worden, dass bei einer solchen Prozessführung das Arbeitsergebnis ebenfalls erheblich verbessert wird. Dabei schließt die Erfindung nicht aus, dass vor dem Fügen die Profilstäbe mehr als einmal spanabhebend bzw. materialabhebend bearbeitet oder die Kontaktflächen der Profilstäbe mehrfach erwärmt werden und der Prozess Erwärmen - Materialentfernung mehrfach durchgeführt wird.

In einer vorteilhaften Ausgestaltung ist daher vorgesehen, dass nach einem ersten Erwärmen eine weitere materialabhebende Bearbeitung der jeweiligen Kontaktflächen bzw. -bereiche und/oder der Sichtflächen des Verbindungsbereiches des Elementes und vor dem Fügen ein zweites Erwärmen erfolgt.

Geschickter Weise ist vorgesehen, dass während der materialabhebenden Bearbeitung und dem Fügen der Profilstäbe die Aufspannung nicht gelöst wird.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

## Patentansprüche

1. Vorrichtung für die Herstellung eines kreuzartigen Elementes aus mindestens drei, an den Kontaktflächen ihrer Enden miteinander verbundenen Kunststoff-Profilstäben, wobei die Vorrichtung mindestens folgendes umfasst:
▪ eine Aufspannvorrichtung für jeden Profilstab, die zumindest derart beweglich gelagert und durch einen Antrieb bewegbar sind, um den jeweiligen Profilstab parallel zu seiner Längserstreckung zu bewegen und zu positionieren,
▪ mindestens ein winkelig ausgebildetes Heizelement zum Erwärmen bzw. Plastifizieren der endseitigen, vorzugsweise winklig ausgestalteten Kontaktflächen bzw. -Bereiche der Profilstäbe,
▪ mindestens drei solche Aufspannvorrichtungen, die ausgebildet sind, um darin aufgespannte Profilstäbe in Richtung des gemeinsamen Verbindungsbereiches aufeinander zu bewegen,
**gekennzeichnet durch**
▪ mindestens ein Bearbeitungswerkzeug für die Bearbeitung der jeweiligen Kontaktfläche bzw. -Bereiche und/oder der Sichtflächen des Verbindungsbereiches des Elementes,
▪ wobei das mindestens eine Bearbeitungswerkzeug ausgebildet ist zur materialabhebenden Bearbeitung zumindest der Sichtfläche des Elementes im Verbindungsbereich der Profilstäbe nach dem Fügen,
▪ wobei das mindestens eine Bearbeitungswerkzeug ausgebildet ist, um nach dem Fügen und Verbinden der Profilstäbe eine materialabhebende Bearbeitung zumindest der die Sichtflächen des Elementes im Verbindungsbereich der Profilstäbe verbindenden Seitenflächen durchzuführen.

2. Vorrichtung nach Anspruch 1, **dadurch gekennzeichnet, dass** die Vorrichtung für das mindestens eine Heizelement je eine Führung und ein Antrieb vorgesehen ist, um das mindestens eine Heizelement entlang einer Anstellrichtung zwischen einer Plastifizierungs- und einer Vorhalteposition zu verfahren.

3. Vorrichtung nach einem der vorhergehenden Ansprüche, **dadurch gekennzeichnet, dass** die Bewegungsrichtungen der Aufspannvorrichtungen auf Höhe der Mittelachse der Profilstäbe eine Bewegungsebene definiert, und die Anstellrichtung mit der Bewegungsebene einen spitzen bis rechtwinkligen, vorzugsweise einen rechten Winkel einschließt und/oder ein spanabhebendes Bearbeitungswerkzeug, wie zum Beispiel ein Messer, Fräser oder Bohrer vorgesehen ist und/oder zumindest eine Aufspannvorrichtung zusätzlich auch winkelig bis rechtwinklig zur Bewegungsebene beweg- und positionierbar ist.

4. Vorrichtung nach einem der vorhergehenden Ansprüche, **dadurch gekennzeichnet, dass** das mindestens eine Bearbeitungswerkzeug an einem beweglich gelagerten und positionierbaren Werkzeugträger angeordnet ist und/oder ein Portal über der Aufspannvorrichtung vorgesehen ist, das mindestens ein Bearbeitungswerkzeug und/oder einen Heizelement trägt und diese zumindest teilweise positioniert und/oder ein mehrgelenkiger Roboterarm vorgesehen ist, der mindestens ein Bearbeitungswerkzeug und/oder Heizelement trägt und diese zumindest teilweise positioniert.

5. Vorrichtung nach einem der vorhergehenden Ansprüche, **dadurch gekennzeichnet, dass** das sie zur Durchführung des Verfahrens nach einem der Ansprüche 6 bis 12 ausgebildet ist.

6. Verfahren für die Herstellung eines kreuzartigen Elementes aus mindestens drei, an den Kontaktflächen ihrer Enden miteinander verbundenen Kunststoff-Profilstäben, zumindest umfassend die folgenden Schritte:
▪ Bereitstellen und Aufspannen jedes zu verbindenden Profilstabes auf einer Aufspannvorrichtung,
▪ Materialabhebende Bearbeitung der jeweiligen Kontaktfläche bzw. -bereiche und/oder der Sichtflächen des Verbindungsbereiches des Elementes vor dem Erwärmen,
▪ Erwärmen bzw. Plastifizieren der endseitigen Kontaktflächen bzw. -bereiche der Profilstäbe, für ein daran dann anschließendes Fügen und Verbinden der Profilstäbe,
▪ Bewegen der in den Aufspannvorrichtungen aufgespannten Profilstäbe in Richtung des gemeinsamen Verbindungsbereiches aufeinander zu,
▪ Fügen und Verbinden der Profilstäbe,
▪ wobei nach dem Fügen eine materialabhebende Bearbeitung zumindest der Sichtfläche des Elementes im Verbindungsbereich der Profilstäbe erfolgt,
▪ wobei nach dem Fügen und Verbinden der Profilstäbe eine metarialabhebende Bearbeitung zumindest der die Sichtflächen des Elementes im Verbindungsbereich der Profilstäbe verbindenden Seitenflächen erfolgt.

7. Verfahren nach dem vorhergehenden Anspruch 6, **dadurch gekennzeichnet, dass** die Schritte dieses Verfahrens genau in folgender Reihenfolge erfolgen:
▪ Bereitstellen und Aufspannen jedes zu verbindenden Profilstabes auf einer Aufspannvorrichtung,
▪ Materialabhebende Bearbeitung der jeweiligen Kontaktfläche bzw. -bereiche,
▪ Erwärmen bzw. Plastifizieren der endseitigen Kontaktflächen bzw. -bereiche der Profilstäbe, und
▪ Fügen und Verbinden der Profilstäbe.

8. Verfahren nach dem vorhergehenden Anspruch 6, **dadurch gekennzeichnet, dass** die Schritte dieses Verfahrens genau in folgender Reihenfolge erfolgen:
▪ Bereitstellen und Aufspannen jedes zu verbindenden Profilstabes auf einer Aufspannvorrichtung,
▪ Materialabhebende Bearbeitung der jeweiligen Kontaktfläche bzw. -bereiche,
▪ Erwärmen bzw. Plastifizieren der endseitigen Kontaktflächen bzw. -bereiche der Profilstäbe,
▪ Fügen und Verbinden der Profilstäbe, und
▪ materialabhebende Bearbeitung zumindest der Sichtfläche des Elementes im Verbindungsbereich der Profilstäbe.

9. Verfahren nach einem der vorhergehenden Ansprüche 6 bis 8, **dadurch gekennzeichnet, dass** nach dem Erwärmen und vor dem Fügen eine weitere materialabhebende Bearbeitung der jeweiligen Kontaktfläche bzw. -bereiche und/oder der Sichtflächen des Verbindungsbereiches des Elementes erfolgt.

10. Verfahren nach einem der vorhergehenden Ansprüche 6 bis 9, **dadurch gekennzeichnet, dass** nach einem ersten Erwärmen eine weitere materialabhebende Bearbeitung der jeweiligen Kontaktfläche bzw. -bereiche und/oder der Sichtflächen des Verbindungsbereiches des Elementes und vor dem Fügen ein zweites Erwärmen erfolgt und/oder während der materialabhebenden Bearbeitung und dem Fügen der Profilstäbe die Aufspannung nicht gelöst wird.

## Claims

1. Device for the production of a cruciform element made of at least three plastic profile rods connected to one another at the contact surfaces of their ends, wherein the device comprises at least the following:
- a biasing device for each profile brought which is mounted so as to be movable and can be moved by a drive at least such as to move the respective profile rod parallel to its longitudinal extension and to position it,
- at least one heating element, angled in form, for heating or plasticizing the contact surfaces or regions of the profile rods which are preferably angled in form,
- at least three such biasing devices, which are designed to move profile rods biased therein towards one another in the direction of the common connecting region,
**characterized by**
- at least one processing tool for the processing of the respective contact surface or regions and/or of the visible surfaces of the connecting region of the element,
- wherein the at least one processing tool is configured for the machining processing of at least the visible surface of the elements in the connecting region of the profile rods after the joining,
- wherein the at least one processing tool is configured to carry out a machining processing of at least the side surfaces connecting the visible surfaces of the elements in the connecting region of the profile rods, after the joining and connecting of the profile rods.

2. Device according to claim 1, **characterized in that** the device is provided for the at least one heating element in each case one guide and one drive, in order to move the at least one heating element along an adjustment direction between a plasticizing and a standby position.

3. Device according to any of the preceding claims, **characterized in that** a movement plane defines the movement directions of the biasing devices on the level of the central axis of the profile rods, and the adjustment direction subtends an oblique to right-angled, preferably a right-angled, angle with the movement plane and/or a machining processing tool, such as for example a blade, milling cutter or drill is provided and/or at least one biasing device is in addition movable and positionable also at an angle up to a right angle with regard to the movement plane.

4. device according to any of the preceding claims, **characterized in that** the at least one processing tool is arranged at a movably mounted and positionable tool carrier and/or a portal is provided above the biasing device which carries at least one processing tool and/or a heating element and positions these at least partially and/or a multi-joint robot arm is provided which carries at least one processing tool and/or heating element and positions these at least partially.

5. Device according to any of the preceding claims, **characterized in that** it is designed to carry out the method according to any of claims 6 to 12.

6. Device for the production of a cruciform element made of at least three plastic profile rods connected to one another at the contact surfaces of their ends, wherein the device comprises at least the following steps:
- providing and biasing each profile rod to be connected on a biasing device,
- machining processing of the respective contact surface or regions and/or of the visible surfaces of the connecting region of the element prior to the heating,
- heating or plasticizing the contact surfaces or regions at the ends of the profile rods for a then subsequent joining in connecting of the profile rods,
- moving the profile rods biased in the biasing devices towards one another in the direction of the common joining region,
- joining and connecting the profile rods,
- wherein after the joining a machining processing of at least the visible surface of the element in the connecting region of the profile rods takes place,
- wherein after the joining and connecting of the profile rods a machining processing of at least the side surfaces connecting the visible surfaces of the element and the connecting region of the profile rods takes place.

7. Method according to the preceding claim 6, **characterized in that** the steps of this method take place in precisely the following sequence:
- providing and biasing each profile rod to be connected on a biasing device,
- machining processing of the respective contact surface or regions,
- heating or plasticizing the contact surfaces or regions at the ends of the profile rods, and
- joining and connecting the profile rods.

8. Method according to the preceding claim 6, **characterized in that** the steps of this method take place in precisely the following sequence:
- providing and biasing each profile rod to be connected on a biasing device,
- machining processing of the respective contact surface or regions,
- heating or plasticizing the contact surfaces or regions at the ends of the profile rods, and
- joining and connecting the profile rods, and
- machining processing of at least the visible surface of the element in the connecting region of the profile rods.

9. Method according to any of the preceding claims 6 to 8, **characterized in that** after the heating and prior to the joining a further machining processing of the respective contact surface or regions and/or the visible regions of the connecting region of the element takes place.

10. Method according to any of the preceding claims 6 to 9, **characterized in that** after a first heating, a further machining processing of the respective contact surface or regions and/or the visible regions of the connecting region of the element and prior to the joining, a second heating takes place and/or the bias is not released during the machining processing and the joining of the profile rods.

## Revendications

1. Dispositif pour la fabrication d'un élément cruciforme à partir d'au moins trois barres profilées en matière plastique reliées les unes aux autres au niveau des surfaces de contact de leurs extrémités, selon lequel le dispositif comprend au moins ce qui suit :
- un dispositif de serrage pour chaque barre profilée qui est logé au moins de manière mobile et est mobile par un entraînement de manière à déplacer et à positionner la barre profilée respective parallèlement à son étendue longitudinale,
- au moins un élément chauffant réalisé de manière angulaire pour le chauffage ou la plastification des surfaces ou zones de contact côté extrémité, configurées de préférence de manière angulaire, des barres profilées,
- au moins trois tels dispositifs de serrage qui sont réalisés afin de déplacer des barres profilées serrées dans ceux-ci en direction de la zone de liaison commune,
**caractérisé par**
- au moins un outil d'usinage pour l'usinage de la surface ou des zones de contact respective(s) et/ou des surfaces visibles de la zone de liaison de l'élément,
- selon lequel le au moins un outil d'usinage est réalisé pour l'usinage par enlèvement de matière au moins de la surface visible de l'élément dans la zone de liaison des barres profilées après l'assemblage,
- selon lequel le au moins un outil d'usinage est réalisé afin de réaliser après l'assemblage et la liaison des barres profilées un usinage par enlèvement de matière au moins des surfaces latérales reliant les surfaces visibles de l'élément dans la zone de liaison des barres profilées.

2. Dispositif selon la revendication 1, **caractérisé en ce que** le dispositif est prévu pour le au moins un élément chauffant respectivement un guidage et un entraînement afin de déplacer le au moins un élément chauffant le long d'un sens d'ajustement entre une position de plastification et une position de conservation.

3. Dispositif selon l'une quelconque des revendications précédentes, **caractérisé en ce que** les sens de déplacement des dispositifs de serrage définissent à hauteur de l'axe médian des barres profilées un plan de déplacement, et le sens d'ajustement forme avec le plan de déplacement un angle aigu à angle droit, de préférence un angle droit et/ou un outil d'usinage par enlèvement de copeaux, tel qu'un couteau, une fraise ou un forêt est prévu et/ou au moins un dispositif de serrage est mobile et positionnable en outre aussi de manière angulaire à perpendiculaire par rapport au plan de déplacement.

4. Dispositif selon l'une quelconque des revendications précédentes, **caractérisé en ce que** le au moins un outil d'usinage est agencé au niveau d'un porte-outils logé et positionnable de manière mobile et/ou un portique est prévu au-dessus du dispositif de serrage qui porte au moins un outil d'usinage et/ou un élément chauffant et positionne celui-ci au moins partiellement et/ou un bras de robot à plusieurs articulations est prévu, lequel porte au moins un outil d'usinage et/ou élément chauffant et positionne celui-ci au moins partiellement.

5. Dispositif selon l'une quelconque des revendications précédentes, **caractérisé en ce qu'**il est réalisé pour l'exécution du procédé selon l'une quelconque des revendications 6 à 12.

6. Procédé pour la fabrication d'un élément cruciforme composé d'au moins trois barres profilées en matière plastique reliées les unes aux autres au niveau des surfaces de contact de leurs extrémités, comprenant au moins les étapes suivantes :
- la fourniture et le serrage de chaque barre profilée à relier sur un dispositif de serrage,
- l'usinage par enlèvement de matière de la surface ou des zones de contact respective(s) et/ou des surfaces visibles de la zone de liaison de l'élément avant le chauffage,
- le chauffage ou la plastification des surfaces ou zones de contact côté extrémité des barres profilées, pour un assemblage consécutif assurant la liaison des barres profilées,
- le déplacement des barres profilées serrées dans les dispositifs de serrage en direction de la zone de liaison commune les unes vers les autres,
- l'assemblage et la liaison des barrres profilées,
- selon lequel après l'assemblage, un usinage par enlèvement de matière au moins de la surface visible de l'élément dans la zone de liaison des barres profilées est effectué,
- selon lequel après l'assemblage et la liaison des barres profilées, un usinage par enlèvement de matière au moins des surfaces latérales reliant les surfaces visibles de l'élément dans la zone de liaison des barres profilées est effectué.

7. Procédé selon la revendication précédente 6, **caractérisé en ce que** les étapes de ce procédé sont réalisées précisément dans l'ordre suivant :
- la fourniture et le serrage de chaque barre profilée à relier sur un dispositif de serrage,
- l'usinage par enlèvement de matière de la surface ou des zones de contact respectives,
- le chauffage ou la plastification des surfaces ou zones de contact côté extrémité des barres profilées, et
- l'assemblage et la liaison des barrres profilées.

8. Procédé selon la revendication précédente 6, **caractérisé en ce que** les étapes de ce procédé sont réalisées précisément dans l'ordre suivant :
- la fourniture et le serrage de chaque barre profilée à relier sur un dispositif de serrage,
- l'usinage par enlèvement de matière de la surface ou des zones de contact respectives,
- le chauffage ou la plastification des surfaces ou zones de contact côté extrémité des barres profilées,
- l'assemblage et la liaison des barrres profilées, et
-- l'usinage par enlèvement de matière au moins de la surface visible de l'élément dans la zone de liaison des barres profilées.

9. Procédé selon l'une quelconque des revendications précédentes 6 à 8, **caractérisé en ce que** après le chauffage et avant l'assemblage, un autre usinage par enlèvement de matière de la surface ou des zones de contact respective(s) et/ou des surfaces visibles de la zone de liaison de l'élément est effectué.

10. Procédé selon l'une quelconque des revendications précédentes 6 à 9, **caractérisé en ce qu'**après un premier chauffage, un autre usinage par enlèvement de matière de la surface ou des zones de contact respective(s) et/ou des surfaces visibles de la zone de liaison de l'élément et avant l'assemblage, un second chauffage sont effectués et/ou pendant l'usinage par enlèvement de matière et l'assemblage des barres profilées, le serrage n'est pas détaché.
